(19) Europäisches Patentamt
European Patent Office
Office européen des brevets

(11) Numéro de publication: **0 284 479 B1**

(12) **FASCICULE DE BREVET EUROPEEN**

(45) Date de publication de fascicule du brevet: **20.05.92**   (51) Int. Cl.⁵: $H02J\ 9/06$, $G06F\ 1/00$

(21) Numéro de dépôt: **88400532.3**

(22) Date de dépôt: **07.03.88**

(54) **Procédé et alimentation de secours pour pallier des défaillances du réseau électrique.**

(30) Priorité: **24.03.87 FR 8704088**

(43) Date de publication de la demande:
**28.09.88 Bulletin 88/39**

(45) Mention de la délivrance du brevet:
**20.05.92 Bulletin 92/21**

(84) Etats contractants désignés:
**BE CH DE ES GB GR IT LI LU**

(56) Documents cités:
**EP-A- 0 049 235**
**FR-A- 2 538 643**
**US-A- 4 651 020**

(73) Titulaire: **ELECTRICITE DE FRANCE Service National**
**2, rue Louis Murat**
**F-75008 Paris(FR)**

Titulaire: **INNOVER, CONSEILLER, PROMOU-VOIR**
**Villelongue d'Aude - Route de Pomy**
**F-11300 Limoux(FR)**

(72) Inventeur: **BOUDAN, Jacques Emile**
**Le Collet Blanc**
**13320 Bouc Bel Air(FR)**
Inventeur: **CORN Christian**
**!, Avenue du Général de Gaulle**
**92140 Clamart(FR)**

(74) Mandataire: **Mestre, Jean et al**
**c/o CABINET LAVOIX 2, place d'Estienne d'Orves**
**F-75441 Paris Cédex 09(FR)**

## Description

L'invention concerne les aliminations de secours destinées à pallier des défaillances du réseau électrique ou secteur afin de parer aux défauts de fonctionnement ou aux altérations des installations qui en résultent.

Comme on a pu le constater, les défaillances du réseau électrique ou secteur sont à l'origine de défauts de fonctionnement ou d'altérations des installations et, plus particulièrement, des circuits électroniques sensibles tels que les circuits des systèmes ou équipements utilisant des calculateurs.

Les défaillances du secteur provoquent, transitoirement, l'altération des sources électriques basse tension qui alimentent les divers circuits de ce type d'équipement et entraînent des variations en dehors des tolérances compatibles à un bon fonctionnement de ceux-ci.

En outre, souvent, la baisse de la tension des sources électriques provoque la perte des programmes stockés dans les mémoires vives. Une parade classique apportée aux anomalies du secteur consiste en l'installation d'une source tampon constituée par un onduleur et utilisant une batterie. Une telle solution est lourde, pour des équipements de petites puissances, encombrante, onéreuse et contraignante.

Une autre solution, moins compliquée mais toutefois suffisante pour la plupart des applications, consiste à détecter assez tôt la défaillance du réseau électrique ou secteur et à lancer, à l'aide du calculateur par example, un programme de sauvegarde permettant de mettre à l'abri les données essentielles stockées dans des mémoires non volatiles, RAM sauvegardées, EEPROM ou mémoires magnétiques.

Lorsqu'on utilise cette solution, il est nécessaire de disposer de sources électriques basse tension qui emmagasinent une énergie suffisante pour permettre le déroulement du programme de sauvegarde; toutefois, l'énergie stockée dans les condensateurs de filtrage des alimentations électriques classiques est trop faible pour permettre l'exécution d'un programme offrant une sécurité complète dans tous les cas de défaillance.

On comprend donc la nature des difficultés auxquelles on a à faire face.

L'invention vise à remédier à de tels problèmes.

L'invention concerne une alimentation de secours économique à construire, offrant une sécurité pratiquement totale pour pratiquement tous les cas de défaillances du réseau électrique et qui, en outre, en optimise la mise en oeuvre.

Comme on le sait, les perturbations du secteur ou réseau électrique peuvent être à l'origine de défaut de fonctionnement ou d'altération des circuits électroniques particulièrement sensibles tels que ceux qu'on utilise dans les microcalculateurs. Ces perturbations provoquent, transitoirement, des variations des sources électriques basse tension alimentant les divers circuits et il en résulte des fonctionnements aléatoires de ceux-ci qui peuvent aller jusqu'à la perte ou l'altération des données stockées dans les mémoires, mêmes lorsque celles-ci sont du type dit à sauvegarde (mémoire RAM à batterie ou mémoire EEPROM électriquement programmable).

Les perturbations du secteur se manifestent habituellement comme des creux de tension ou des minicoupures que l'on peut qualifier "d'impulsions négatives". Les minicoupures sont les plus gênantes pour les circuits sensibles et ont des durées qui peuvent atteindre l'ordre de la demi-seconde. Lorsqu'on utilise pour source tampon la solution d'un onduleur alimenté par une batterie, on obtient une autonomie de quelques dizaines de minutes qui va bien au-delà de ce qui est strictement nécessaire mais, si l'on veut une sécurité encore accrue, il est nécessaire de compléter cet onduleur par un calculateur ou ordinateur à programme de sauvegarde.

Comme on peut l'observer, la très grande majorité des perturbations du réseau ou secteur ont une durée qui est inférieure à la seconde et la durée d'exécution d'un programme de sauvegarde est en général bien inférieure. On voit donc que la durée d'autonomie conférée par un tel onduleur associé à un programme de sauvegarde, est surabondante dans la plupart des cas.

Un état de la technique est illustré par le document FR 2 538 643. Selon ce document, on assure seulement la surveillance d'un réseau de distribution électrique en observant les variations de sa seule tension par rapport à un seuil de tension de référence et en mesurant la durée pendant laquelle cette tension s'est écartée du seuil de tension de référence. La solution proposée ne fait nullement appel ni à un échantillonnage double en couples tension-durée ni à une alimentation de secours pour pallier les carences du réseau.

On comprend donc tout l'intérêt de l'invention.

L'invention a pour objet un procédé d'alimentation de secours pour pallier des défaillances du réseau électrique afin de parer aux défauts de fonctionnement ou aux altérations des installations en résultant. Ce procédé est caractérisé par les particularités exposées dans la revendication 1.

Ce procédé est aussi remarquable notamment en ce qu'on régule la sortie de la source tampon et, en outre, s'il y a lieu, en ce qu'on surveille le niveau du stock d'énergie emmagasiné dans la source tampon. Au besoin, suivant ce procédé on régule l'entrée de la source tampon.

L'invention a aussi pour objet, notamment pour la mise en oeuvre du procédé selon l'invention, une alimentation de secours dont les particularités ressortent de la revendication 5.

Une variant de l'alimentation de secours comprend une source tampon pour prendre la relève du réseau électrique défaillant. Cette source tampon est caractérisée en ce qu'elle comprend un circuit à condensateur haute tension pour stocker de l'énergie à une tension voisine de la tension crète du secteur, un circuit élévateur de tension, un générateur de signaux moyenne fréquence alimenté par ce circuit élévateur et un abaisseur de tension transformant ces signaux moyenne fréquence pour servir de source tampon. Cette source tampon est remarquable en ce que le circuit élévateur de tension est un régulateur maintenant pratiquement constante la tension de la source tampon quand la tension du condensateur de stockage varie entre une valeur maximale et la moitié de cette dernière.

Une autre variante de l'alimentation de secours comprend un régulateur de tension de stockage de la source tampon qui comprend un comparateur de tension, un circuit de pilotage commandé par le comparateur, un transistor dont la base est connectée au circuit de pilotage et un condensateur alimentant une self inductance qui sont reliés le premier à l'émetteur du transistor et la second à son collecteur.

D'autres caractéristiques de l'invention apparaîtront à la lecture de la description et des revendications qui suivent et à l'examen du dessin annexé, donné uniquement à titre d'exemple, où :

- la Fig.1 est un diagramme de l'architecture d'une alimentation de secours selon l'invention et de ses connections fonctionnelles aux circuits du réseau et de l'utilisation ou installation ;
- la Fig.2 est un organigramme logique du mode opératoire du circuit de diagnostic de l'alimentation de secours selon l'invention assurant la surveillance du réseau ;
- la Fig.3 est un schéma électrique d'un mode de réalisation d'un circuit de diagnostic selon l'invention supposé construit avec des composants discrets ;
- la Fig.4 est un organigramme logique du mode opératoire du circuit de diagnostic de l'alimentation de secours selon l'invention assurant la surveillance de l'état de charge de la source tampon ;

- la Fig.5 est un schéma électrique d'un mode de réalisation de la source tampon, avec son circuit limiteur du courant de charge, de l'alimentation de secours suivant l'invention ;
- la Fig.6 est un diagramme de l'architecture de la régulation de la sortie de la source tampon de l'alimentation de secours suivant l'invention ;
- la Fig.7 est un schéma électrique d'un mode de réalisation de la régulation de la sortie de la source tampon selon la Fig.6 ;
- la Fig.8 est une variante du schéma de la Fig.7 ;
- la Fig.9 est un diagramme de l'architecture de la régulation d'entrée de la source tampon de l'alimentation de secours suivant l'invention ;
- la Fig.10 est un schéma électrique d'un mode de réalisation de la régulation d'entrée de la source tampon selon la Fig.9 ;
- la Fig.11 estune variante du schéma de la Fig.10 ; et
- la Fig.12 est un schéma électrique d'un mode de réalisation d'une distribution pour l'alimentation de secours selon l'invention.

Dans la suite de la description on supposera que les réalisations pratiques des circuits selon l'invention sont faites à l'aide de composants discrets. Il est clair que de tels circuits peuvent être obtenus à l'aide de circuits intégrés comme il est classique de le faire maintenant.

Pour la commodité de la description on se reportera aux figures du dessin suivant un ordre qui ne correspond pas nécessairement à celui de leur numérotation. On décrira successivement chacun des sous-ensembles pouvant contribués à la constitution de l'alimentation de secours selon l'invention.

Le procédé et l'alimentation suivant l'invention utilisent les résultats d'analyses statistiques des défaillances du secteur ou réseau d'alimentation de manière à n'émettre un signal de déclenchement d'un programme de sauvegarde que lorsque la défaillance est probablement grave, réduisant ainsi de beaucoup le nombre de perturbations intempestives.

Pour ce faire, on fixe des valeurs de seuil de tension et de temporisation ou durée permettant le classement des défaillances typiques à l'aide de couples de valeurs caractéristiques qui leur sont particuliers et qui en sont représentatifs.

De plus, lors du rétablissement du secteur, selon l'invention on observe sa consolidation avant de donner l'ordre de départ du programme normal, éliminant ainsi la plupart des mises en marche qui seraient déclenchées inopinément à cet instant où statistiquement on n'est pas encore assuré de la disparition de l'incident.

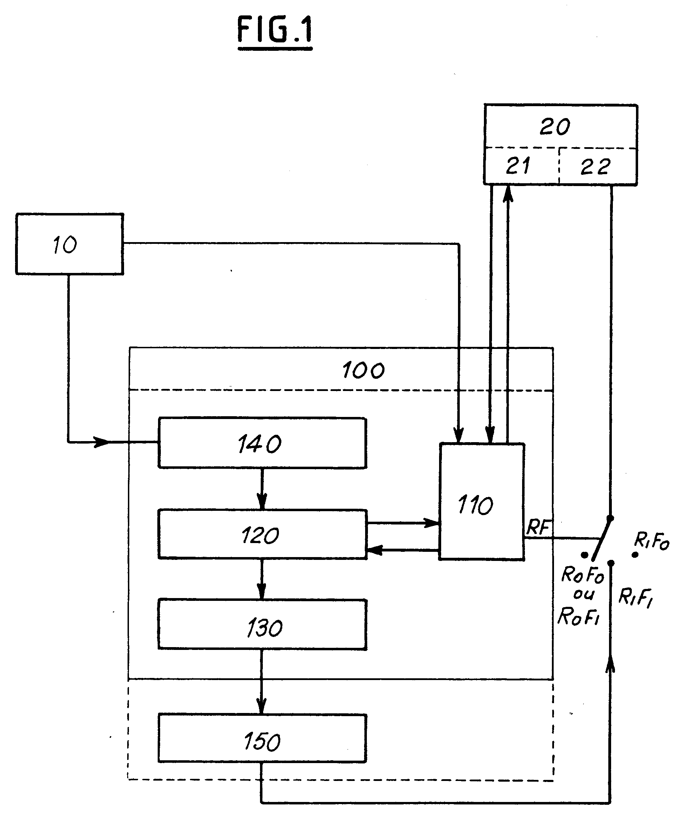

En regardant la Fig.1, on voit que le réseau d'alimentation ou secteur 10 fournit de l'énergie électrique à un circuit d'utilisation ou installation 20 par l'entremise d'une alimentation de secours 100 selon l'invention.

Le secteur 10 qui délivre une tension nominale de crête $U_0$ fournit, en principe, une tension instantanée u au circuit d'utilisation 20 constitué, par example, d'un système de sauvegarde 21 sur lequel on reviendra par la suite et d'équipements 22 de tous types.

L'alimentation de secours 100 comprend, essentiellement, un circuit de diagnostic 110, une source tampon 120, une régulation de sortie 130 de la source tampon 120, une régulation d'entrée 140 de la source tampon 120 et, s'il y a lieu, une distribution 150.

Les liaisons ou connexions réunissant les différents rectangles symbolisant les divers circuits de la Fig.1, illustrent les relations fonctionnelles établies entre eux.

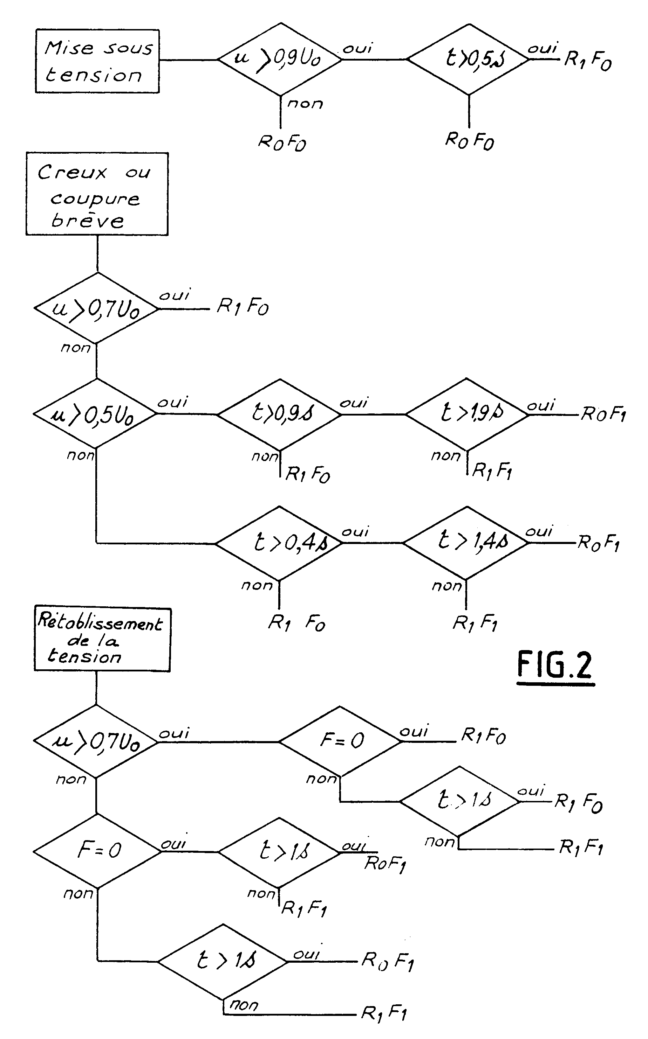

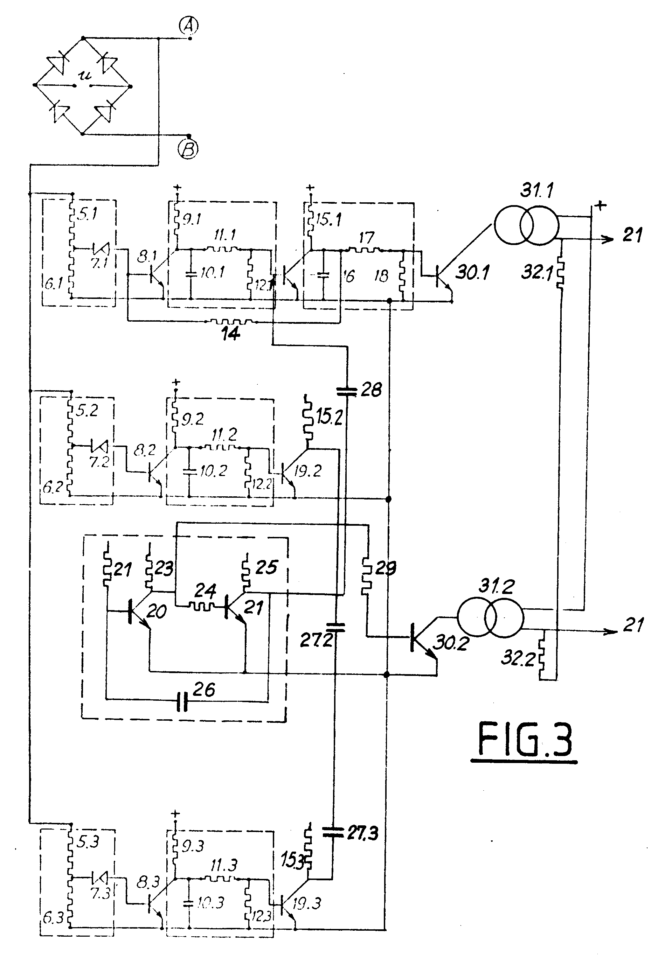

Le circuit de diagnostic 110 dont un mode de réalisation est représenté sur la Fig.3, donné à titre d'exemple, permet de mettre en oeuvre notamment le procédé selon l'invention. Ce circuit de diagnostic opère selon un processus logique illustré sur l'organigramme de la Fig.2.

La tension u du secteur est redressée par un pont de diodes classique, illustré et non référencé.

Le montage de résistances série 5.1 et 6.1, 5.2 et 6.2, 5.3 et 6.3, et les diodes Zenner 7.1, 7.2, 7.3 définissent des seuils de tension fixés, par exemple, respectivement à 90% , 70% et 50% de la valeur nominale $U_0$ du secteur.

La temporisation déterminée par des résistances qui fixent les constantes de temps référencées 9.1 à 12.1 est de 20 ms et par celles référencées de 15 à 18 de 500 ms. La temporisation établie par les résistances référencées 9.2 à 12.2 est de 900 ms et celle déterminée par les résistances référencées de 9.3 à 12.3 de 400 ms. La durée de 20 ms qui correspond à la durée d'un cycle de la tension u du secteur a été choisie pour caractériser la tension crête de ce dernier qui, dans ce cas, sert de référence. Les durées de 1,4s et 1,9s qui figurent sur l'organigramme de la Fig.2 sont obtenues directement par des montages classiques appropriés ou bien par addition des durées de 400 ms et 900 ms avec la durée de 1s fixée par la bascule monostable dont il est question par la suite.

La résistance 14 assure un maintien. Le montage constitué par les transistors 20 et 21, les résistances 22, 23, 24, 25 et le condensateur 26 forme une bascule monostable de durée 1 s. La transmission vers la logique informatique, par exemple le système de sauvegarde 21, est assuree sous la forme binaire par l'entremise s'il y a lieu de deux photocoupleurs 31.1 et 31.2.

Lors de la mise sous tension, le transistor 30.1 ne devient passant que si la tension u est supérieure a 90 % de $U_0$ pendant plus de 500 ms. Le signal "marche normale" est transmis en signal binaire 1 par exemple a la sauvegarde 21.

Si la tension u est maintenue en dessous de 70% de $U_0$ pendant plus de 900 ms ou en dessous de 50 % $u_0$ pendant plus de 400 ms, le signal binaire ci-dessus prend la valeur zéro, déclenchant le programme de sauvegarde.

L'organigramme logique de la Fig.2 permet de saisir comment le circuit diagnostic 110 selon l'invention opère. Trois situations y sont schématisées: "mise sous tension" initiale ; survenance d'une défaillance: "creux ou coupure brève" et à la suite d'un incident le "rétablissement de la tension".

On utilise la combinaison de deux ordres logiques RUN ou RESET (R) et FAIL (F) qui peuvent prendre chacun deux états binaires distincts 0 et 1, soit en tout quatre combinaisons des situations $R_0$ et $R_1$, d'une part, et $F_0$ et $F_1$, d'autre part.

L'installation ou utilisation 20 est à l'arrêt dans les conditions $R_0 F_0$ ou $R_0 F_1$ et fonctionne en marche normale sur le secteur dans la condition $R_1 F_0$ et en marche sauvegardée sur la source tampon dans la condition $R_1 F_1$.

Pour des raisons d'optimisation et de sécurité, lorsque le système de sauvegarde 21 a été déclenché à la suite de la détection d'une anomalie répertoriée par le circuit diagnostic 110, le déroulement du programme de sauvegarde se poursuit jusqu'à sa fin normale, son achèvement complet, sans interruption même si le réseau reprend une situation statistiquement normale en cours d'exécution du programme de sauvegarde. En d'autres termes, le déclenchement du système de sauvegarde est irréversible.

L'origine des temps t est décomptée à partir du début de la perturbation.

Comme on le verra par la suite, on assure un stockage d'énergie en quantité suffisante dans la source tampon 120 pour exécuter le programme de sauvegarde après son déclenchement.

Pour obtenir une parfaite sécurité de fonctionnement de l'alimentation de secours, il est nécessaire de contrôler que le stock d'énergie de la source tampon 120 est suffisant. L'expérience montre que, lors d'une défaillance grave, des tentatives de rétablissement sont effectuées par les automatismes du réseau.

Lors d'une mise ou d'une remise sous tension, d'un rétablissement de la tension suivant une coupure d'une certaine durée (par exemple cinq secondes), il est donc prudent de n'autoriser la mise en fonctionnement de l'installation 20 que lorsque le stock d'énergie de la source tampon 120 est reconstitué.

D'autre part, lorsqu'une minicoupure dépasse une valeur typique, il est prudent de déclencher le programme de sauvegarde lorsque l'énergie résiduelle du stock de la source tampon 120 est encore suffisante pour en assurer l'exécution.

Enfin, lorsque le niveau du stock de la source tampon 120 atteindra une valeur voisine de la valeur minimale en dessous de laquelle le maintient des tensions nécessaires à un bon fonctionnement n'est plus garanti, il est prudent d'émettre un signal provoquant l'arrêt de tout fonctionnement pour empêcher un fonctionnement anarchique résultant de tensions qui tombent au voisinage des seuils minima.

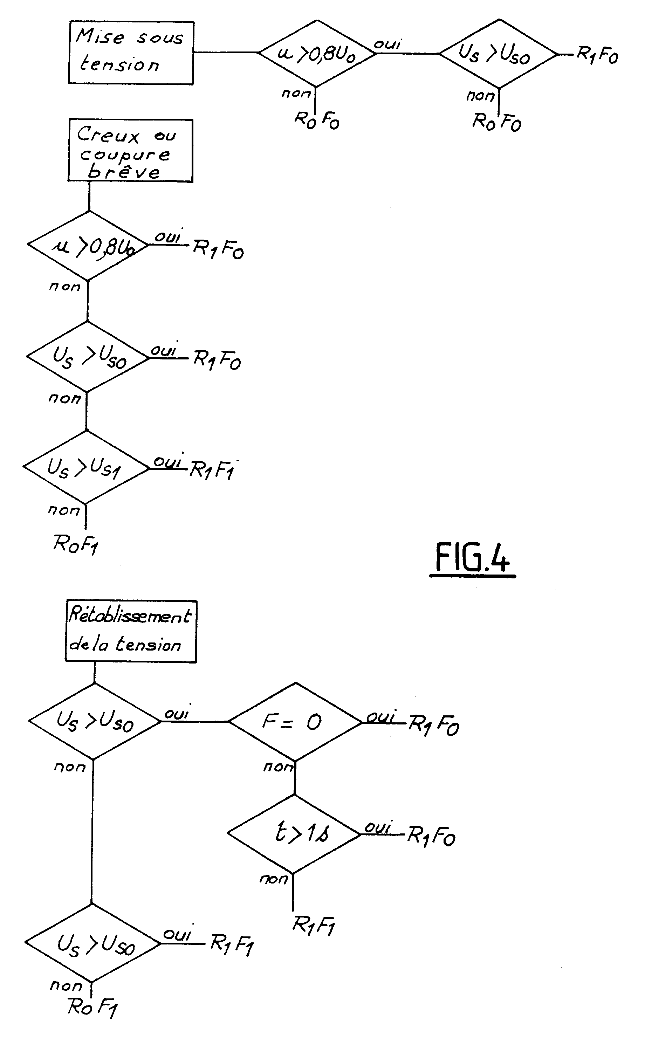

Le fonctionnement est illustré sur l'organigramme logique de la Fig.4 où sont représentés, successivement, le cas de la "mise sous tension", celui de la survenance d'une défaillance "creux ou coupure brève" et enfin la remise sous tension ou "rétablissement de la tension".

Lors d'une mise sous tension initiale, l'alimentation de secours 100 démarre après 0,2 s environ, la distribution 150 établissant les diverses tensions nécessaires à l'utilisation 20. Le stock d'énergie de la source tampon 120 n'ayant pas sa valeur minimale, la bascule logique RESET affiche le signal binaire zéro ($R_0$) interdisant tout fonctionnement. Lorsque le stock d'énergie atteint sa valeur nominale, la bascule logique RESET passe à 1 ($R_1$), autorisant le fonctionnement. Simultanément la bascule logique FAIL passe à zéro. Lorsque la bascule FAIL affiche le signal binaire 1 elle bloque le fonctionnement alors que lorsqu'elle indique le signal binaire zéro elle l'autorise.

Lors du passage de perturbations ne nécessitant pas de puiser dans le stock une énergie suffisante pour atteindre les seuils d'inversion, l'état des bascules RESET ET FAIL reste inchangé.

Pour un défaut plus important, la bascule FAIL s'inverse. Si la tension du reséau se rétablit, la bascule FAIL restera dans son état jusqu'à la réconstitution du stock de la source tampon. La durée pendant laquelle la bascule FAIL conserve son état est, en tous cas, suffisante pour permettre l'exécution complète du programme de sauvegarde.

Si la tension du réseau ne s'est pas rétablie, le seuil de basculement suivant provoque l'inversion de la bascule RESET, le programme de sauvegarde ayant été auparavant exécuté dans tous les cas, comme indiqué.

Les durées comprises entre le début d'une perturbation et l'inversion des bascules FAIL et RESET dépendent de l'allure de la perturbation puisque basées sur la mesure de l'énergie disponible stockée dans la source tampon 120.

L'organigramme logique de la Fig.4 permet de suivre le déroulement des opérations à la "mise sous tension" initiale, lors de l'apparition d'une anomalie "creux ou coupure brève" et à la reprise ou "rétablissement de la tension".

Sur cet organigramme $U_s$ indique la tension stockée dans la source tampon, $U_{s0}$ et $U_{s1}$ la valeur des seuils de cette tension qui provoquent les basculements $F_1$ et $R_0$, respectivement.

Les durées sont décomptées à partir de l'apparition du signal $F_1$ quelle que soit la phase d'apparition du défaut.

On peut considérer que l'exécution non justifiée d'un programme de sauvegarde est une perturbation de l'exploitation. L'invention optimise le fonctionnement puisque ne lançant le programme de sauvegarde qu'en cas de coupure importante très probable.

Si l'utilisation 20 est un système ouvert, asservi à un système qui peut être perturbé par une défaillance ne l'affectant pas, une alimentation de secours suivant l'invention permet d'émettre vers l'installation un signal approprié d'alarme.

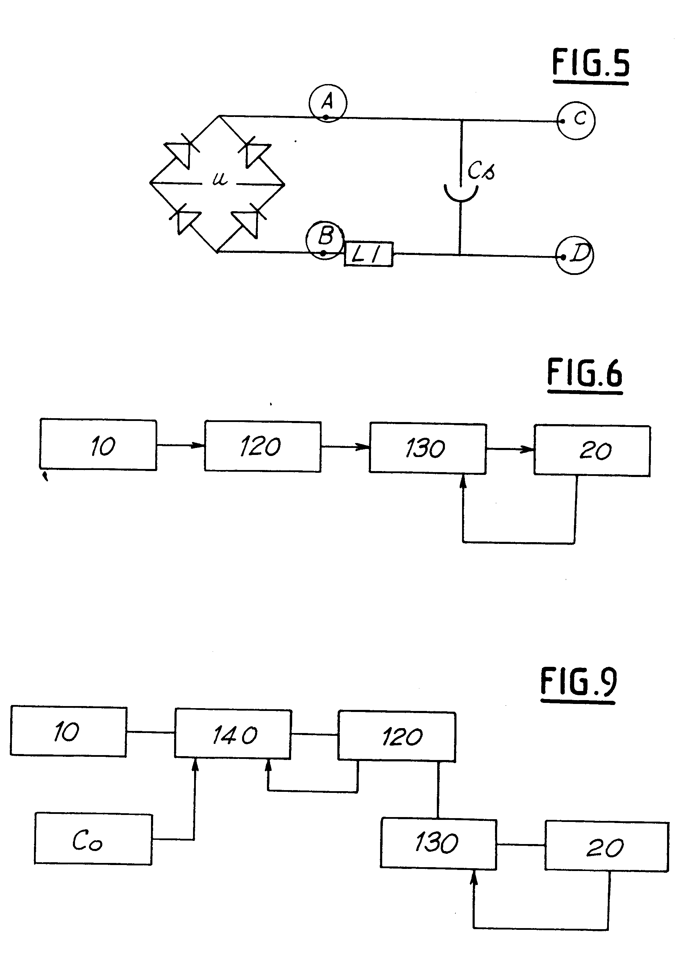

La source tampon 120 utilisée pour le stockage de l'énergie est illustré schématiquement sur la Fig.5.

La tension du réseau u est redressé par le pont de diodes, comme illustré sur la Fig.3, et charge, à travers un dispositif limiteur du courant de charge LI un condensateur $C_s$ dit condensateur de stockage. Des modes de réalisation d'un dispositif limiteur de courant de charge sont, par exemple, exposés dans la demande de brevet français 86 09 541 déposée le 1er juillet 1986 aux noms d'EDF et ICP.

Le circuit de régulation de sortie 130 fournit, à partir de la source tampon 120, la ou les tensions nécessaires à l'utilisation 20, éventuellement par l'intermédiaire d'une distribution 150 sur laquelle on reviendra par la suite.

Ce circuit de régulation a pour fonction de maintenir constante la tension nécessaire à l'utilisation 20 pour une large plage de variation de la tension du condensateur de stockage $C_s$.

L'énergie accumulée dans un condensateur est égale à :

$$E = \tfrac{1}{2} CU^2$$

où E est l'énergie en joule, C la capacité du condensateur en farad et U la valeur de la tension en volt.

Lorsque U baisse de la valeur maximale $U_m$ à la valeur $\tfrac{1}{2} U_m$, l'énergie varie de la valeur maximale E à la valeur $\tfrac{1}{4}$ E.

En fixant la plage de variation de la tension $U_s$ du condensateur $C_s$ entre la valeur maximale et la moitié de cette valeur, les trois quarts de l'énergie stockée sont utilisables, ceci permet de minimiser le dimensionnement du condensateur de stockage $C_s$. Par exemple, un condensateur de 5 mF chargé à 230 V pourra assurer l'alimentation d'une utilisation consommant une puissance de 100 W pendant environ 1 s.

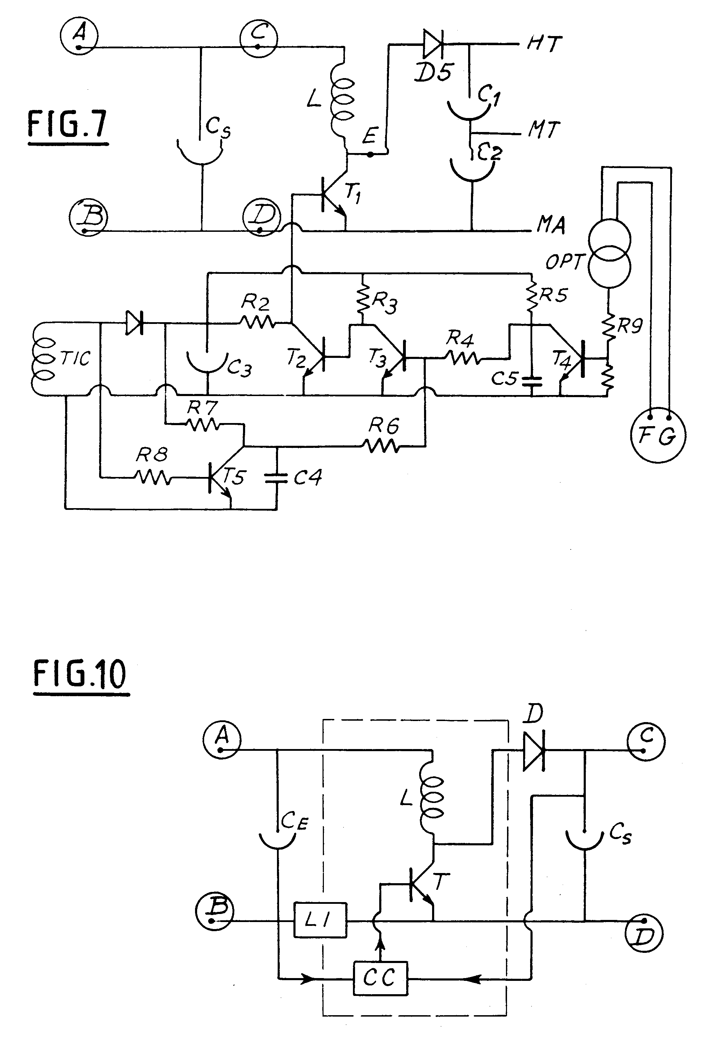

La figure 7 représente la réalisation d'un circuit de régulation de sortie 130 suivant l'invention dont l'architecture est schématisée sur la Fig.6.

Le condensateur $C_s$ est connecté à une self L et à un transistor de puissance $T_1$ qui est piloté par un transistor $T_2$, lui-même commandé par un transistor $T_3$, de telle sorte que $T_1$ est conducteur lorsque $T_3$ est conducteur.

Un transistor $T_5$, une résistance $R_7$ et un condensateur $C_4$ forment un générateur de rampe synchronisé par un signal issu du secondaire $T_{1C}$ d'un transformateur moyenne fréquence d'un oscillateur.

Un transistor $T_4$, une résistance $R_5$ et un condensateur $C_5$ forment un amplificateur du signal issu d'un photocoupleur OPT.

Des résistances $R_4$, $R_6$ et $R_8$ forment un additionneur analogique modifiant le temps de conduction du transistor $T_5$ en fonction de la valeur du signal issu du transistor $T_4$ de l'amplificateur.

Le fonctionnement de ce circuit régulation de sortie 130 est le suivant.

La mise en conduction du transistor $T_1$ applique la tension du condensateur $C_s$ aux bornes de la self L, établissant dans celle-ci un courant croissant dont la valeur maximale est fonction de la durée de conduction. Lors du blocage du transistor $T_1$, la tension au collecteur s'accroit rapidement jusqu'à ce que la diode $D_5$ conduise. Le courant dans la self décroit jusqu'à la valeur zéro et reste à zéro jusqu'au prochain cycle.

L'énergie soutirée au condensateur de stockage $C_s$ est transmise au circuit d'utilisation 20 via, éventuellement, le circuit de distribution 150.

Le circuit de régulation de sortie 130 modifie la durée de conduction du transistor $T_1$ pour maintenir la tension à l'entrée du circuit de distribution 150 de telle sorte qu'on conserve une valeur constante tant que la tension $U_s$ du condensateur $C_s$ reste dans une certaine plage, comprise par exemple entre la tension maximale et une valeur voisine de la moitié de cette valeur.

Grâce à une régulation de sortie 130, l'énergie nécessaire est stockée à tension voisine de la tension crête $U_0$ du secteur dans le condensateur $C_s$ haute tension, puis élevée à une tension supérieure pour alimenter un générateur de signaux moyenne fréquence. Ces signaux sont transformés en signaux basse tension qui sont distribués aux circuits sensibles.

Le circuit effectuant l'élévation de tension est un régulateur maintenant la tension d'une source à une valeur constante quelle que soit la valeur de la tension du ou des condensateurs de stockage comprise entre une valeur maximale et un peu moins de la moitié de cette valeur. Lors d'une coupure du secteur, un peu plus des trois quart de l'énergie totale stockée avant la coupure dans les condensateurs est ainsi utilisée pour le maintien des sources.

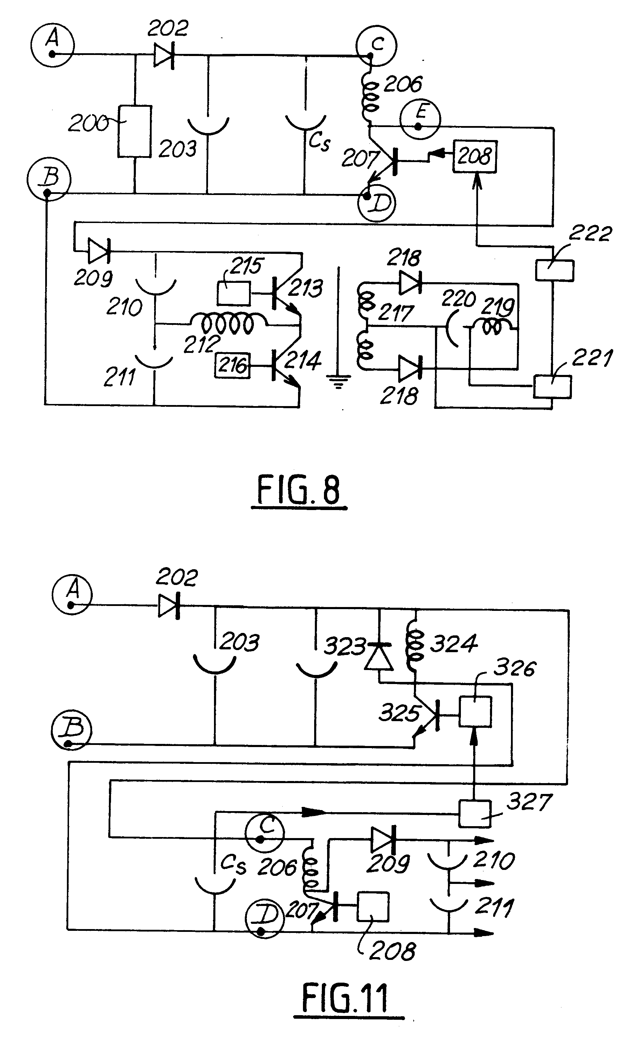

Une telle régulation 130 est illustrée sur la figure 8. Le pont redresseur du secteur u est suivi d'une diode 202 permettant l'insertion des composants de la figure 5 symbolisés par le rectangle 200. Un condensateur 203 filtre une tension de valeur voisine de la tension crête $U_0$ stockée dans le condensateur $C_s$. Le courant de mise sous tension est limité. Une self 206 est alimentée par un transistor 207 piloté par un générateur 208 de signaux carrés. L'énergie inductive assure la charge de condensateurs 210 et 211 à travers une diode 209. Cette tension alimente un oscillateur de relaxation du type push-pull série constitué par le primaire d'un transformateur 212, des transistors 213 et 214 et leurs circuits pilotes 215 et 216. Le secondaire 217 de ce transformateur 212, à travers des diodes 218, alimente une source basse tension par l'entremise d'un filtre 219 - 220. La tension de cette source est comparée à une tension de référence dans un comparateur 221 qui fournit un signal isolé par un photocoupleur 222 commandant le générateur 208.

Les valeurs suivantes des composants sont données à titre d'exemple.

La somme des puissances utiles des sources et des pertes est de 100 W. Le condensateur de stockage $C_s$ a une capacité de 2000 $\mu$F et la tension de stockage est de 300 V. L'énergie stockée utilisable permet un fonctionnement pendant 0,9 s.

Cette durée est une fonction quadratique de la tension de stockage et est donc diminuée si le secteur se maintient à une valeur faible avant la coupure ; ceci correspond à des cas pratiques rencontrés.

Afin de rendre cette durée indépendante des fluctuations de la tension du réseau, à l'intérieur des tolérances, on interpose une régulation d'entrée 140 entre le secteur redressé et le condensateur de stockage $C_s$ de la source tampon 120.

L'architecture d'une telle régulation d'entrée est schématisée sur la Fig.9.

La Fig.10 représente un schéma simplifié d'une telle régulation d'entrée 140.

Le pont redresseur de diodes alimente un condensateur d'entrée $C_E$ et le condensateur de stockage $C_s$ à travers une diode D et un dispositif limiteur LI dont il a été question précédemment. Un circuit de contrôle CC, du type décrit précédemment à propos de la réalisation de la régulation de sortie 130, agit sur la durée de conduction d'un transistor de puissance T en fonction de la valeur de la tension du condensateur $C_s$, comparée à une valeur de consigne $C_0$. D'autre part, en période transitoire, une information relative au courant de charge est transmise au circuit de contrôle CC pour limiter le courant dans le transistor à une valeur admissible.

Lors de la mise sous tension, le courant de charge du condensateur de stockage $C_s$ doit être maintenu inférieur ou égal à une valeur maximale admissible par les organes de protection interposés entre le réseau 10 et l'utilisation 20, à l'aide du circuit limiteur LI. Lorsque la puissance maximale de l'installation est petite, le circuit limiteur LI peut être constitué par une simple résistance. Cette solution présente toutefois l'inconvénient de provoquer une perte d'énergie en régime permanent, causant une dissipation calorifique par effet Joule qui n'est plus admissible à partir d'une certaine puissance.

Cet inconvénient est évité en utilisant la régulation d'entrée 140 de la source tampon 120. La valeur de la tension de stockage est fixée à une valeur voisine, par défaut, de la valeur maximale d'utilisation du condensateur de stockage $C_s$.

Une variante d'une telle régulation d'entrée est représenté sur la Fig.11, à titre d'exemple complémentaire. Les composants 202 à 211 ont des rôles comparables à ceux qu'ils ont sur le mode de réalisation de la Fig.8. Un condensateur 323 alimente une self 324 et un transistor 325 piloté par un circuit 326. La tension du condensateur de stockage $C_s$ est sous le contrôle d'un comparateur 327 qui commande le circuit 326.

Dans cet exemple, la tension de stockage est fixée à 380 V. La durée de fonctionnement est portée à 1,4s et est indépendante de la tension du secteur avant une coupure, dans des limites données.

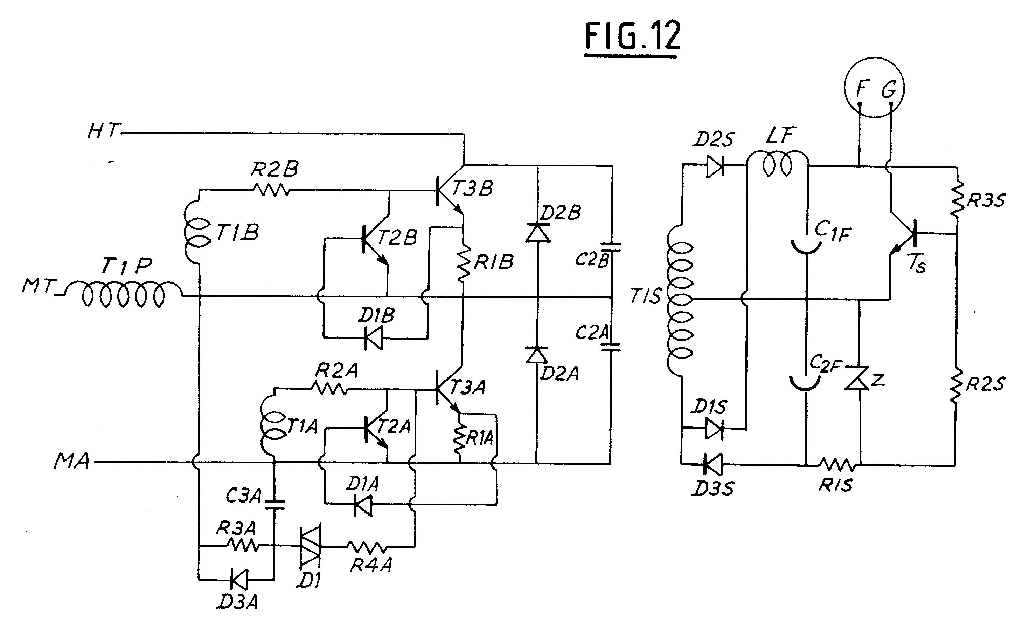

La Fig.12 représente, à titre d'exemple la réalisation d'un circuit d'une distribution 150. Cette distribution 150 délivre à l'installation ou utilisation 20 les diverses tensions nécessaires au fonctionnement des équipments 22 et du système de sauvegarde 21, par exemple.

Le circuit de cette distribution est constitué, essentiellement, par un oscillateur de type pushpull série nécessitant une source à point milieu obtenue avec des condensateurs d'égale valeur. Cet oscillateur comprend des transistors de puissance $T_{3A}$ et $T_{3B}$ et leurs transistors pilotes $T_{2A}$ et $T_{2B}$, le primaire $T_{1P}$ d'un transformateur $T_1$ moyenne fréquence (environ 25 kHz) et les enroulements de polarisation $T_{1A}$ et $T_{1B}$. Des résistances d'émetteur $R_{1A}$ et $R_{1B}$ et les diodes $D_{1A}$ et $D_{1B}$ permettent de régler le courant dans l'enroulement du primaire $T_{1P}$ du transformateur. Des diodes $D_{2A}$ et $D_{2B}$ permettent le retournement des signaux. Des condensateurs $C_{2A}$ et $C_{2B}$ règlent la pente du signal trapézoïdal de l'oscillateur.

L'oscillation est déclenchée par un circuit "démarreur" constitué par des résistances $R_{3A}$ et $R_{4A}$, un condensateur $C_{3A}$, une diode $D_{3A}$ et un diac DI.

Le transformateur $T_1$ possède un enroulement secondaire à point milieu $T_{1S}$ permettant le redressement des deux alternances du signal trapézoïdal par des diodes $D_{1S}$ et $D_{2S}$.

Le signal redressé est filtré par une self inductance $L_F$ et un condensateur $C_{1F}$ ; il sert de source principale alimentant l'utilisation 20. D'autres enroulements secondaires supplémentaires peuvent servir, si besoin est, aussi à l'alimentation de l'utilisation.

Une diode $D_{3S}$ et un condensateur $C_{2F}$ forment une source négative alimentant une diode Zenner Z.

Un transistor $T_S$ et des résistances $R_{2S}$ et $R_{3S}$ constituent un montage comparateur qui délivre un signal de régulation transmis, par exemple à l'aide d'un photocoupleur si besoin est, à l'amplificateur d'entrée de la régulation de sortie 130.

Le fonctionnement de ce circuit d'une distribution 150 est le suivant.

Lorsque la tension du réseau $\bar{u}$ est dans ses tolérances, le circuit de la régulation de sortie 130 maintient, à l'aide du comparateur une tension constante à la source positive principale de la distribution, quelles que soient les variations de la tension du réseau $\bar{u}$ dans les tolérances ou les variations de consommation de la source tampon 120.

Lorsqu'apparait un creux important de tension ou une coupure peu importante, le circuit de la régulation de sortie 130 puise dans le condensateur $C_s$ l'énergie nécessaire pour maintenir constante la ou les tensions alimentant l'utilisation 20, tant que la tension de $C_s$ reste supérieure à la moitié environ de la valeur maximale.

De ce qui précède on comprend donc tout l'intérêt de la technique de la source tampon qui identifie les défaillances du réseau, en tension et durée,en fonction de leur probabilité statistique de leur survenance, et met en oeuvre un système de sauvegarde qui, le cas échéant, déclenche la mise en service d'une source tampon dont l'énergie qui y est stockée peut être rendue indépendante des fluctuations du réseau précédant une défaillance et surveillée de manière à rester toujours suffisante pour le fonctionnement du système de sauvegarde et dont l'énergie restituée peut être régulée.

A propos de la description de l'invention on a mentionné un système de sauvegarde, des calculateurs et des organigrammes logiques. Il va de soi que les calculateurs, ordinateurs, microprocesseurs sont des éléments de la technique courante et la manière d'établir et de rédiger des instructions ou autres programmes nécessaires à leur fonctionnement sont du domaine du spécialiste en la matière.

**Revendications**

1. Procédé d'alimentation de secours pour pallier des défaillances du réseau électrique afin de parer aux défauts de fonctionnement ou aux altérations des installations en résultant caractérisé en ce qu'il consiste à répertorier les défaillances du réseau en tenant compte de leurs tension relative et durée propres, à établir des couples de valeurs de seuil en tension et durée pour celles des défaillances répertoriées qui sont les plus probables, à fixer des couples de valeurs de consigne de tension et de durée en fonction des couples de valeurs de seuil correspondants retenus, à émettre un signal d'enclenchement d'un système de sauvegarde mettant en service une source tampon lorsque des couples de valeurs de consigne de tension et durée sont atteints par le réseau, à observer la consolidation du rétablissement du réseau en suivant l'évolution de ses valeurs de tension et durée et à émettre, le cas échéant, un signal de remise en marche normale de l'installation lorsqu'un de ces couples de valeurs de consigne de tension et de durée est atteint par le réseau ou bien à émettre un signal d'arrêt du fonctionnement de l'installation.

2. Procédé d'alimentation de secours selon la revendication 1, caractérisé en ce qu'on surveille le niveau de l'énergie stockée dans la source tampon pour qu'il reste toujours supérieur à un seuil minimal permettant dans tous les cas le fonctionnement du système de sauvegarde et, au besoin, l'émission du signal d'arrêt du fonctionnement de l'installation.

3. Procédé d'alimentation de secours selon la revendication 1 ou 2, caractérisé en ce qu'on régule l'entrée de la source tampon pour la rendre indépendante des fluctuations du réseau qui précèdent une défaillance.

4. Procédé d'alimentation de secours selon l'une quelconque des revenddications 1 à 3, caractérisé en ce qu'on régule la sortie de la source tampon pour soustraire l'installation aux variations du réseau.

5. Alimentation de secours (100) pour suppléer aux défaillances du réseau électrique (10) afin de parer aux défauts de fonctionnement ou aux altérations des installations (20) en résultant, notamment pour la mise en oeuvre du procédé selon l'une quelconque des revendications 1 à 4, caractérisée en ce qu'elle comprend un circuit de diagnostic (110) détecteur de défaillances pour fixer des couples de valeurs de consigne de tension et de durée fait essentiellement d'au moins un circuit détecteur de seuils de tension et d'au moins un circuit détecteur de seuils de durée alimenté par le circuit détecteur de seuil de tension.

6. Alimentation de secours selon la revendication 5, caractérisée en ce que le circuit détecteur de seuil de tension comprend deux résistances (5, 6) en série et une diode Zenner (7) connectée au point commun à ces dernières.

7. Alimentation de secours selon la revendication 5 ou 6, caractérisée en ce que le circuit détecteur de durée comprend une résistance (9) et un condensateur (10) en série d'une part et deux résistances (11, 12) en série montées en parallèle aux bornes du condensateur (10) d'autre part.

8. Alimentation de secours selon l'une quelconque des revendications 5 à 7, caractérisée en ce qu'elle comprend une source tampon (120) avec une régulation de sortie (130) faite d'un circuit à condensateur haute tension $(C_s)$ pour stocker de l'énergie à une tension voisine de la tension de crête $(U_0)$ du réseau (10), un circuit élévateur de tension, un générateur de signaux moyenne fréquence alimenté par un circuit élévateur de tension et un circuit abaisseur de tension transformant ces signaux moyenne fréquence pour les convertir en source de tension de remplacement.

9. Alimentation de secours selon la revendication 8, caractérisée en ce qu'elle comprend une régulation d'entrée (140) de la source tampon (120) faite d'un comparateur de tension, d'un circuit de pilotage commandé par ce comparateur, d'un transistor dont la base est connectée à ce circuit de pilotage et d'un condensateur alimentant une self qui sont reliés le premier à l'émetteur de ce transistor et la seconde au collecteur de ce dernier.

10. Alimentation de secours selon l'une des revendications 8 et 9, caractérisé en ce qu'elle comprend une régulation de sortie (130) de la source tampon (120) faite notamment du circuit élévateur de tension de la source tampon.

## Claims

1. Emergency supply process for obviating failures of the electrical power supply in order to obviate operational faults or damage to installations resulting therefrom, characterized in that it consists of listing the failures of the network taking account of their relative voltages and times, establishing pairs of voltage - time threshold values for which the listed failures are most probable, fixing pairs of reference voltage - time values as a function of the pairs of corresponding threshold values adopted, emitting a signal triggering a protection system putting into operation a buffer source when the pairs of reference voltage - time values are reached by the network, observing the consolidation of the restoration of the network following the evolution of the voltage - time values and emitting, if appropriate, a signal for putting back the installation into normal operation when one of the pairs of reference voltage - time values is reached by the network or emit a signal stopping the operation of the installation.

2. Emergency supply process according to claim 1, characterized in that monitoring takes place of the energy level stored in the buffer source so that it always remains above a minimum threshold permitting in all cases the operation of the protection system and, if necessary, the emission of the installation operation stoppage signal.

3. Emergency supply process according to claims 1 or 2, characterized in that the input of the buffer source is regulated so as to make it independent of fluctuations of the network preceding a failure.

4. Emergency supply process according to any one of the claims 1 to 3, characterized in that the output of the buffer source is regulated in order to free the installation from network variations.

5. Emergency supply (100) for making good failures of the electric power supply (10) in order to obviate operational faults or damage to installations (20) resulting therefrom, particularly for putting into operation the process according to any one of the claims 1 to 4, characterized in that it comprises a failure detecting diagnostic circuit (110) for fixing pairs of reference - time values and constituted essentially by a circuit detecting voltage threshold and at least one circuit detecting time threshold supplied by the voltage threshold detecting circuit.

6. Emergency supply according to claim 5, characterized in that the voltage threshold detecting circuit comprises two resistors (5, 6) in series and a Zener diode (7) connected to the common point thereof.

7. Emergency supply according to claims 5 or 6, characterized in that the time detecting circuit comprises a resistor (9) and a capacitor (10) in series on the one hand and two resistors (11, 12) in series connected in parallel to the terminals of the capacitor (10) on the other.

8. Emergency supply according to any one of the claims 5 to 7, characterized in that it comprises a buffer source (120) with an output regulator (130) formed from a high voltage capacitor circuit ($C_S$) for storing energy at a voltage close to the peak voltage ($\upsilon_0$) of the network (10), a voltage raising circuit, a medium frequency signal generator supplied by a voltage raising circuit and a voltage lowering circuit transforming the medium frequency signals in order to convert them into a replacement voltage source.

9. Emergency supply according to claim 8, characterized in that it comprises an input regulator (140) of the buffer source (120) formed by a voltage comparator, a control circuit controlled by said comparator, a transistor, whose base is connected to this control circuit and a capacitor supplying a choke, whereof the first is connected to the emitter of said transistor and the second to its collector.

10. Emergency supply according to one of the claims 8 and 9, characterized in that it comprises an output regulator (130) of the buffer source (120) normally formed by the voltage raising circuit of said buffer source.

## Patentansprüche

1. Verfahren zur Notversorgung zum Ausgleich von Ausfällen des elektrischen Netzes, um Funktionsfehler oder daraus resultierende Schwankungen der Einrichtungen aufzufangen, dadurch gekennzeichnet, daß es darin besteht, die Ausfälle des Netzes unter Berücksichtigung ihrer relativen Spannung und ihrer Dauer zu registrieren, Schwellwertpaare für die Spannung und die Dauer für diejenigen registrierten Ausfälle aufzustellen, die am wahrscheinlichsten sind, Einstellwertpaare für Spannung und Dauer als Funktion der entsprechenden festgehaltenen Schwellwertpaare festzulegen, ein Auslösesignal für ein Sicherheitssystem auszusenden, das eine Pufferquelle in Gang setzt, wenn Einstellwertpaare für Spannung und Dauer von dem Netz erreicht sind, die Konsolidierung der Wiederherstellung des Netzes durch Verfolgen der Entwicklung seiner Werte für Spannung und Dauer zu beobachten und erforderlichenfalls ein Signal zum normalen Wiedaringangsetzen der Einrichtung zu senden, wenn eines dieser Einstellwertpaare für Spannung und Dauer von dem Netz erreicht wird, oder ein Signal für das Anhalten der Funktion der Einrichtung auszusenden.

2. Verfahren zur Notversorgung nach Anspruch 1, dadurch gekennzeichnet, daß man den Pegel der in der Pufferquelle gespeicherten Energie überwacht, damit er immer über einer Minimalschwelle liegt, was auf jeden Fall das Funktionieren des Sicherheitssystems und erforderlichenfalls das Senden des Signals für das Anhalten der Funktion der Einrichtung erlaubt.

3. Verfahren zur Notversorgung nach einem der Ansprüche 1 oder 2, dadurch gekennzeichnet, daß man den Eingang der Pufferquelle regelt, um sie unabhängig von Netzschwankungen zu halten, die einem Ausfall vorausgehen.

4. Verfahren zur Notversorgung nach einem der Ansprüche 1 bis 3, dadurch gekennzeichnet, daß man den Ausgang der Pufferquelle regelt, um die Einrichtung vor den Netzschwankungen zu bewahren.

5. Notversorgung (100) zum Ausgleichen von Ausfällen des elektrischen Netzes (10), um Funktionsfehler oder daraus resultierende Schwankungen der Einrichtungen (20) aufzufangen, insbesondere zum Durchführen des Verfahrens nach einem der Ansprüche 1 bis 4, dadurch gekennzeichnet, daß sie einen Diagnoseschaltkreis (110) zur Ausfalldetektion umfaßt, um Einstellwertpaare von Spannung und Dauer festzulegen, der im wesentlichen aus wenigstens einem Detektorschaltkreis für Dauerschwellwerte besteht, der von dem Spannungsschwellwertdetektorschaltkreis versorgt wird.

6. Notversorgung nach Anspruch 5, dadurch gekennzeichnet, daß der Detektorschaltkreis für den Spannungsschwellwert zwei Widerstände (5, 6) in Reihe und eine Zenerdiode (7) umfaßt, die mit dem gemeinsamen Punkt dieser letzteren verbunden ist.

7. Notversorgung nach Anspruch 5 oder 6, dadurch gekennzeichnet, daß der Detektorschaltkreis für die Dauer auf der einen Seite einen Widerstand (9) und einen Kondensator (10) in Reihe und auf der anderen Seite zwei Widerstände (11, 12) in Reihe, die parallel zu den Klemmen des Kondensators (10) montiert sind, umfaßt.

8. Notversorgung nach einem der Ansprüche 5 bis 7, dadurch gekennzeichnet, daß sie eine Pufferquelle (120) mit einer Ausgangsregelung (130), die aus einem Hochspannungkondensatorschaltkreis ($C_S$) besteht, um Energie mit einer Spannung in der Nähe der Spitzenspannung ($u_0$) des Netzes (10) zu speichern, einen Spannungerhöhungsschaltkreis, einen Signalgenerator mittlerer Frequenz, der von einem Spannungserhöhungsschaltkreis versorgt wird, und einen Spannungssenkungsschaltkreis umfaßt, der diese Signale mittlerer Frequenz transformiert, um sie in eine Ersatzspannungsquelle umzuwandeln.

9. Notversorgung nach Anspruch 8, dadurch gekennzeichnet, daß sie eine Eingangsregelung (140) für die Pufferquelle (120) umfaßt, die aus einem Spannungskomparator, einem Steuerschaltkreis, der von diesem Komparator gesteuert wird, einem Transistor, dessen Basis mit diesem Steuerschaltkreis verbunden ist, und einem Kondensator besteht, der eine Selbstinduktionsspule versorgt, die als erstes mit dem Emitter dieses Transistors und als zweites mit dem Kollektor des letzteren verbunden sind.

10. Notversorgung nach einem der Ansprüche 8 und 9, dadurch gekennzeichnet, daß sie eine Ausgangsregelung (130) für die Pufferquelle umfaßt, die hauptsächlich aus einem Spannungerhöhungsschaltkreis für die Pufferquelle besteht.

# FIG.1

Mise sous tension

$u > 0,9 U_0$ — oui — $t > 0,5s$ — oui — $R_1 F_0$

non
$R_0 F_0$

$R_0 F_0$

Creux ou coupure brève

$u > 0,7 U_0$ — oui — $R_1 F_0$

non

$u > 0,5 U_0$ — oui — $t > 0,9s$ — oui — $t > 1,9s$ — oui — $R_0 F_1$

non — $R_1 F_0$   non — $R_1 F_1$

non

$t > 0,4s$ — oui — $t > 1,4s$ — oui — $R_0 F_1$

non — $R_1 F_0$   non — $R_1 F_1$

Rétablissement de la tension

## FIG.2

$u > 0,7 U_0$ — oui — $F = 0$ — oui — $R_1 F_0$

non   non

$t > 1s$ — oui — $R_1 F_0$

non — $R_1 F_1$

$F = 0$ — oui — $t > 1s$ — oui — $R_0 F_1$

non   non — $R_1 F_1$

$t > 1s$ — oui — $R_0 F_1$

non — $R_1 F_1$

FIG.3

FIG.4

## FIG.5

## FIG.6

## FIG.9

FIG.7

FIG.10

FIG. 8

FIG.11

# FIG.12

EP 0 284 479 B1